# EUROPEAN PATENT APPLICATION

(11) **EP 3 081 435 A1**
(43) Date of publication of application: **19.10.2016**
(21) Application number: 15163757.6
(22) Date of filing: 15.04.2015
(51) Int. Cl.: B60R 13/08, B29C 65/08, B29C 65/00

(54) **LIGHTWEIGHT ENGINE MOUNTED TRIM PART**

(71) Applicant: Autoneum Management AG, 8406 Winterthur (CH)
(72) Inventor: Müller, Christian, 8400 Winterthur (CH); Davide Caprioli, 8400 Winterhur (SZ)

(57) **Abstract**

Engine mounted trim part for a vehicle engine comprising a fibrous carrier layer and at least one mounting system for mounting the trim part to a vehicle engine characterised in that the mounting system is built such that it can form a vibration-coupled connection upon mounting to the engine and the fibrous carrier layer is at least self-damping such that it can dampen the vibrational energy.

## Description

### Technical Field

The present invention is directed to a light weight engine mounted trim part and a method of producing such trim part.

### Background Art

It is known to cover a vehicle engine with trim part or trim part to reduce engine noise and/or retain heat around the engine. These types of trim part are mounted on the engine block using vibrational isolated mounting systems.

State of the art engine covers are for most parts merely made of injection moulded plastic. Therefore these structures are heavy and very stiff.

A typical embodiment of such a sound damping cover is described in DE-10'2005'014'535. This document discloses in particular a mounting attachment for a motor covering part, which mounting attachment is provided with decoupling elements, which should avoid any vibration excitation of the covering part itself. It seems to be a dogma in the field that additional decoupling elements in the mounting system are required, otherwise the trim part would produce strong vibrational noise - rattling sound and or might have problems with durability of the cover at the mounting connection to the trim part and or would come of under vibration. Therefore known mounting systems for trim part connected to vibrating units in a vehicle have a decoupling integrated in the form of a rubber or thermoplastic element.

It is therefore an object of the current invention to optimise an engine mounted cover or trim part, in particular to overcome the above mentioned problems, in particular to simplify the mounting system.

### Summary of invention

The object is achieved by the engine mounted trim part or cladding for a vehicle according to claim 1 and the process of producing such trim part according to claim.

In an embodiment according to the invention an engine mounted trim part or cladding for a vehicle engine comprising a fibrous carrier layer and at least one mounting system for mounting the trim part to a vehicle engine the mounting system is built such that it can form a vibration-coupled connection upon mounting to the engine and the fibrous carrier layer is at least self-damping.

Surprisingly, it was found that the combination of a fibrous carrier layer directly connected to an engine, which is vibrating during use, through a vibration- coupled connection shows enough absorption of the vibrational energy coming from the engine to self-dampen the system. Not only enabling an omission of the decoupler unit normally used in engine mounted trim parts, but also enabling a use of a lightweight part.

The fibrous carrier layer of the engine trim part according to the invention consists of a consolidated fibrous material consisting of filler fibres and a binder in the form of a thermoplastic binder or a thermoset binder whereby the binder forms small binding points between the fibers to consolidate the fibrous material.

In a most preferred solution the fibrous carrier layer consist of glass fibers and polyamide binder fibers, whereby the polyamide binder fibers are melt to form small droplets binding the filler fibers together and thereby consolidating the web. This material formulation shows a low dependency of the bending stiffness against operative engine bay temperatures. Thanks to the stability of the part stiffness according to temperature, number of natural modes of the part, in ambient temperature condition is very similar of number of natural modes at general engine bay temperature condition. This enables the part not to have higher modal density due to part softening that would else impact negatively the acoustic radiation performance of the part. The glass filler fibers might be at least partly replaced with polyester fibres, for instance polyethylene terephthalate, and or cotton fibers. Preferably the polyethylene terephthalate are hollow conjugate crimped fibers. The at least in part replacement of the glass fibers with polyester fibers further enhances the self-damping effect of the fibrous carrier layer.

Surprisingly the use of the most preferred fibrous carrier material further enhances the self-damping effect and increases the overall durability of the part. In particularly a replacement of the filler fibers at least in part with polyester fibers, preferably the hollow conjugate crimped fibers, further enhances the self-damping properties of the engine cover trim part with the mounting system according to the invention. At the same time material still preserve a low dependency of the bending stiffness against operative engine bay temperatures. This enables the part not to have higher modal density due to part softening that would else impact negatively the acoustic radiation performance of the part.

The area of connection is preferably materially connected to the fibrous layer and or at least partly penetrating the fibrous material. This not only enhances the self-damping of the overall trim part but also the durability of the mounting connection between the mounting system and the fibrous carrier layer of the engine mounted trim part.

With materially connected is meant that the material of the carrier layer and the material of the connecting area of the mounting are bonded such that they cannot be taken apart without damaging at least one of the materials. Although an adhesive might be used, there should be at least an intimate contact between the two main materials directly.

Preferably the connection is a welded connection between the mounting system and the fibrous carrier layer, preferably an ultrasonic welding connection.

Further preferably the mounting system comprises at least a thermoplastic base plate that enables the material connection between the fibrous carrier layer and the base plate, preferably using ultrasonic welding.

Preferably the mounting system comprises a snap-in connection. For instance a snap in mounting system with a female part and a male part, whereby the male part has a ball shaped end that can be inserted into the female part by a snap-in connection so as to be retained therein. Both the male and female part is made of a rigid material, for instance one of metal or a thermoplast. For the function of the mounting it is not relevant if the male or female portion is connected to the fibrous layer, however easy removal the female part is preferred.

The part of the mounting connection, either the male or the female part, materially connected to the fibrous layer might be made of at least one piece. An one piece part would then have at least an base area for materially connecting to the fibrous layer and at least a second area for engaging with the counter part in a snap-in connection.

Preferably these two areas can be made as 2 pieces interconnecting with each other to form a part of the mounting solution.

Preferably at least the thermoplast of at least the base portion is chosen from the group of materials comprising polyamide, in particularly polyamide 6 or polyamide 6.6, polyester, in particularly polyethylene terephthalate or polybutylene terephthalate, and wherein the thermoplast may or may not contain filler, e.g. mineral fibers preferably glass fibers.

The welding is preferably done by using a welding head with multiple protrusions, creating multiple welding connections in parallel, preferably the protrusions are build such, that they can at least penetrate the fibrous carrier layer in part and create an even stronger material connection between the base plate and the fibrous carrier layer.

Preferably the protrusions of the welding head are able to puncture and penetrate any additional layers that are on the preferred site of the mounting connection, such that there will be an actual binding with the fibers of the fibrous carrier layer. Any material in the direct area of the mounting might be further compressed and moved aside thereby further enhancing the connection between the molten base plate material and the fibrous carrier layer.

Surprisingly the loss of acoustic dampening, which occurs due to the omission of a conventional elastomeric decoupler arranged between the top cover and the engine of the motor vehicle as a part of a conventional mounting, can be compensated by providing an acoustically self-dampening construction of the top cover. A top cover, which at least contains a fibrous structural layer, was found to provide a satisfying acoustically dampening when used in combination with the snap-in mounting according to the invention. Therefore, acoustical dampening can be also easily achieved by using the simplified and cost-saving construction of the snap-in mounting according to the invention.

The fibrous carrier layer of the engine trim part according to the invention consists of a consolidated fibrous material consists of filler fibres and a binder in the form of a thermoplastic binder or *a thermoset binder* whereby the binder forms small binding points between the fibers to consolidate the fibrous material.

The filler fibers preferably are at least one of thermoplastic fibers, preferably polyester fibers, preferably polyethylene-terephthalate (PET) or polybutylene terephthalate (PBT), natural fibers, preferably cotton or flax fibers, or mineral fibers, preferably glass fibers, carbon, ceramic or basalt fibers or a mixture of such fibers.

Preferably at least part of the thermoplastic filler fibers used is self-crimped fibers, preferably conjugate fibers, more preferably hollow conjugate fibers.

As the thermoplastic binder either a copolymer of polyester, preferably the copolymer of polyethylene terephthalate, or polyamide, preferably polyamide 6 or polyamide 66 is used.

*As the thermoset binder a resinous type preferably phenolic resin is used*

In a further preferred embodiment the engine bay trim part according to the invention further comprises an acoustic absorbing layer, preferably a fibrous layer or an open cell foam layer.

In another preferred embodiment the engine bay trim part according to the invention further comprises a film layer between the carrier layer and the absorbing layer which is permeable or becomes permeable during the moulding of the part, preferably a thermoplastic polyurethane film layer.

Surprisingly the use of the fibrous carrier layer according to the invention further improves the durability of the overall engine cover trim part with regard to the resistance of the layer to vibrations, in particularly at the area of connection of mounting means to the carrier layer. It was further found that the attenuation of noise in the low frequency range was at least equal or better as materials that are dampened with an additional elastomeric decoupling in their mounting means. This is in particularly interesting for parts that are directly mounted to vehicle structures with a high level of vibrational energy like the engine or the power train as well as in certain cases the bonnet. Or structures that are connected via the main often steel body of the car, which is a good conductor for vibrational noise.

Surprisingly a rigid connection to the source of the structure born noise, for instance a vehicle engine in combination with a fibrous carrier layer, show much less generated noise than anticipated from the onset.

Preferably the mounting means are directly connected to the fibrous carrier layer to further enhance the attenuation of the structure borne noise passed to the carrier layer by the rigid mounting system. Due to the lower overall weight of the consolidated fibrous material of the trim part according to the invention, it is possible to achieve approximately the same number of vibration modes in comparison to a classic plastic cover. Additionally considering the higher structural damping of the material against plastic, it is possible to simplify the mounting systems used by eliminating the decoupler made of an elastomeric material.

Preferably the engine cover according to the invention is able to follow the contour of the engine surface with the adjacent surface, even if it might not touch it actually. At the same time the outer site of the cover follows a preferred aesthetic and or aerodynamic profile that is not necessary comparable with the surface directly covering the engine. Hence the cross section shows a variable thickness, and therefore a variable density in the materials used for the carrier layer and or absorbing layer to follow both requirements.

The engine bay trim part preferably further comprises at least a carrier layer made of a fibrous layer or an open cell foam layer. The carrier layer is defined as the layer giving substantially the structural stiffness to the part. Other layers might enhance it but are not the main contributor to the structural stiffness of the part.

If the carrier layer is a fibrous layer preferably it comprises at least of filler fibers and a thermoplastic or thermoset binder, whereby the binder forms small binding points between the fibers.

As a thermoplastic binder either a copolymer of polyester, or polyamide, preferably polyamide 6 or polyamide 66 can be used. Preferably the binder is in the form of fibres, flakes or powder, whereby fibers are best to obtain a more homogenous mixture with the other fibers.

Alternative a thermoset binder can be used for instance a resinous type of material like phenolic resin.

The filler fibers are at least one of thermoplastic fibers, for instance polyester fibers, like polyethylene-terephthalate, natural fibers, like flax or cotton, or mineral fibers, like glass fibers, ceramic fibers, carbon or basalt fibers, or a combination of those fibers. It can also be a mixture of such fibers, for instance a mixture of polyester and glass fibers. The fibers can be staple fibers or endless filaments.

Preferably the fibers are self-crimped fibers eventually combined with the other fibers mentioned, for instance non self-crimped thermoplastic fibers, glass fibers and or cotton fibers.

Self-crimped fibres are fibres with two components arranged such that one component has a shrinking behaviour different from the other component and thereby induce a shaping of the filament away from the straight line, for instance in the form of spiral, omega or helical. However in most cases the shape is not necessarily a regular structure: irregular 3 dimensionally shaped versions are having the same advantage. In self-crimped fibers the crimp is permanent. A pre-requisite for self-crimping is a certain crimping potential created by differences in shrinkage, shrinking power and module of elasticity of the two components in the fiber.

A mechanical crimp might be used to further enhance the fiber crimp and the shape formed, for instance by including a stuffer box treatment or a saw tooth gear treatment.

Self-crimped fibers differ from mechanical crimped fibers in a way that they obtain the crimping capacity during the spinning of the fiber as an intrinsic feature of the fiber, hence the self-crimping is permanent. This intrinsic self-crimp is less likely to be lost during further production process steps or later use of the material, preferably it might be reinstated during process steps when necessary.

Preferably the self-crimped fibres have an overall round cross section, more preferably with a hollow core, also known as hollow conjugate fibers. However, other cross-sections known in the art to make conjugate self-crimped fibers can be used as well.

Surprisingly the use of self-crimped fibers further improves the durability of the carrier layer with regard to the resistance of the layer to vibrations, in particularly at the area of connection of mounting means to the carrier layer. It was further found that the attenuation of noise in the low frequency range was at least equal or better as materials that are dampened with an additional elastomeric decoupling in their mounting means. This is in particularly interesting for parts that are directly mounted to vehicle structures with a high level of vibrational energy like the engine or the power train as well as in certain cases the bonnet. Or structures that are connected via the main often steel body of the car, which is a good conductor for vibrational noise.

The self-crimped fiber used in the carrier layer of the trim part according to the invention is preferably a side by side conjugate fiber. Preferably the conjugate material is chosen such that there is a difference in viscosity causing an inherent permanent self-crimping in the fibre. However other types of conjugate fibers that show a self-crimping as defined might be chosen as well.

Preferably, the self-crimped fibers are made of one or a combination of polyester and or its copolymers, for instance polyethylene terephthalate or polybutylene terephthalate.

All polymers used for either the binder fibers, thermoplastic fibers or the crimped fibers can be virgin or coming from recycled and/or regenerated resources, as long as the material requirements are given. Also the natural fibers for instance the cotton fibers can be either virgin or used from a reclaimed source, for instance as a shoddy cotton.

The use of the crimped fibers in the blend of either the carrier layer and or an additional fibrous absorbing layer (later discussed in more detail) further enhances the acoustic performance.

The two components should be distributed in the filament string such that a difference in shrinkage in the length of the filament is given. The maximum crimp may be developed when the fibers are comprised of equal parts of each component and the components were separated and located on opposite sides of the fiber.

The staple fibre length of self-crimped fibers used is preferably between 32 and 76 mm. The fiber is preferably between 2 and 20 dtex, more preferably between 2 and 10 dtex.

Overall the use of the self-crimped fibers enhances the evenness of the material layer obtained by for instance air lay methods or more preferred carding methods. The natural tendency of the self-crimped fibers to go back to a random curled form gives the fibers an additional resilience. The permanency of the crimp prevents the loss of the crimp during processing.

If the carrier is a fibrous layer, the area weight of the layer may be between 200 and 1700 g/m², preferably between 400 and 1500g/m².

An examples of possible fibre compositions is (% given are % by weight):
- Glass fibers mixed with polyamide binder fibers whereby the binder fibers will melt and form bonding points between the glass fibers. Preferably a mixture of between 55 and 80% of glass fibers and between 45 and 20% of Polyamide binder fibers are used. The glass fibers might be at least partially replaced by other filler fibers like polyester fibers, for instance PET or PBT. Preferably self-crimped polyester hollow conjugate fibers are used to at least partially replace the glass fibers. For instance a mixture of filler fibers of at least 10% of polyester fibers and 90% of glass fibers, and maximal 100% of polyester fibers are used as filler fibers, thereby keeping the same ratio of filler fibers and binder fibers.

Surprisingly the replacement of the glass fibers at least partially with self-crimped fibers eventually combined with standard polyester fibers and or cotton fibre showed a better vibrational damping at least at the compressed areas where mounting means are connected to the carrier layer.

This has the further advantage that the trim part can use mounting means without a decoupling element also on vibrating surfaces without increasing vibrational noise.

Other examples of possible fibre compositions are (% given are % by weight):
- Glass fibers mixed with a thermoset binder, like for instance a glass fiber mat (also called glass wool) with 10-20%, preferably 15% phenolic resin. The glass fibers might be partly replaced by filler fibers like cotton and/or polyester, preferably with self-crimped fibers, for instance 15-20% phenolic resin, 0-30% cotton or 0-30% polyester or 0-30% self-crimped polyester fibre, and 50-60% glass fibers.
- Alternatively a fibrous solution without glass fibers might be chosen, for instance a mixture of PET and polyamide fibers whereby the polyamide fibers will melt and form bonding points between the PET fibers.

At least in those cases where polyamide is used as the binder preferably the part is moulded under direct contact with water saturated steam under pressure whereby the apparent melting point of the polyamide is decreased under its melting temperature as measured with differential scanning calorimetry (DSC). So the melting temperature of the PET can be at least 240°C. By using this method the polyester fibers will not melt and stay a fibrous network in the carrier material, keeping the noise absorbing character of the fibrous layer. Preferably the PET fibers are at least partly replaced with crimped polyester fibers and or cotton fibers.

Preferably thermoplastic fibers including a flame retardant agent in the polymer are used.

In another embodiment the engine trim part with a fibrous carrier layer and the multilayer surface material according to the invention further comprises a embedded logo press-moulded for instance during the production of the trim part, whereby the carrier layer is locally further compressed to form a desired logo either as positive imprint, whereby the area around the logo is further compressed such that the logo stands out or as a negative whereby the logo itself is further compressed. The multilayer surface material according to the invention in combination with the carrier material makes these types of logos possible to produce in the same process step as the moulding of the full part, without the need for additional materials or process steps.

The later addition of logos on top of the multilayer surface material is alternatively possible. These logos may be made of any type of suitable plastic able to withstand high temperatures and that can be glued to the surface. Alternatively the logos can have a protrusion on the back, which slots in the carrier layer through a small gap and can be welded to the back for instance using an ultra sound welding device.

Another alternative is using transfer prints on the outer layer, for instance using preprinted logos or decoration, that can be transferred to the surface for instance as a decal.

In another preferred embodiment the engine bay part with the carrier layer and the multilayer surface material according to the invention further comprises an additional absorbing layer, in the form of either a fibrous layer or an open cell foam layer. For this layer the same type of materials as disclosed for the carrier layer can be used. However as this layer is not functioning as a carrier layer, the density and or stiffness of this layer is less than for the carrier layer.

Preferably the open cell foam is made of polyurethane and further comprises graphite. For instance the foam as disclosed in EP1153066 and its production in EP1153067 can be used together with the invention as disclosed. Preferably the foam contains graphite preferably exfoliating, in the range of between 2 and 40% by weight of the foam. The density for the foam may be between 10 and 35 kg/m³, for instance a slab stock material with a density of between 12 and 20 kg/m³. The area weight of the layer in the final product can in addition be set using different thicknesses of the slab stock material, preferably between 5 and 50 mm. The final thickness of the absorbing layer in the part is variable and depending on the design of the part, usually between 1 and 20mm, whereby the lower thickness is in the area of the rim and mounting while the thick areas is in the areas related to absorbing noise.

The thickness of the absorbing layer > the thickness of the carrier layer, in the areas related to absorbing noise, preferably the carrier layer is between 2 and 10 mm and the thickness of the absorbing layer is between 8 and 30 mm.

In the area of the rim and or the mounting, the thickness for both layers can be as low as 1-2 mm enabling a good connection to the mounting means.

The additional absorbing layer can be placed between the multilayer surface material and the carrier layer or underneath the carrier layer in the direction facing the surface of the vehicle component to be covered.

An example of a trim part according to the invention is build up as follows: A multilayer surface material with a knitted fabric and a thermoplastic polyurethane perforated film is laminated to an additional absorbing layer in the form of a semi-rigid open cell polyurethane layer and at the opposing site of the absorbing layer, the fibrous carrier layer made of glass fibers bound with polyamide fibers as binder material is laminated to the absorbing layer. Preferably this layer is covered with a thin nonwoven layer, only for preventing the layer from sticking to the mould.

Another example of a trim part according to the invention is build up as follows: A multilayer surface material with a knitted fabric and a thermoplastic polyurethane perforated film is laminated to a fibrous carrier layer made of glass fibers bound with polyamide fibers as binder material, and at the opposing site of the carrier layer, an additional absorbing layer in the form of a semi-rigid open cell polyurethane layer is used. Preferably this layer is covered with a thin nonwoven layer, for preventing the layer from sticking to the mould and for protecting the foam layer during handling of the part.

The thermoplastic polyurethane (TPU) layer of the covering material may also serve as an adhesive layer for laminating the fabric layer to the carrier material or the additional absorbing layer without the need for an additional adhesive layer between these two layers. In case of the carrier layer being the preferred layer of glass fibers and polyamide binder there is also no need for an additional adhesive layer. However it might be necessary in certain material combination that an additional adhesive layer is needed.

The difference between such a normal adhesive layer and the use of TPU or perforated TPU is that during moulding at high temperature the TPU does not disintegrate substantially, it stays in the form of a film.

While state of the art film materials used, like polyolefin films for instance, will melt and form droplets which are wicked in the surrounding layers. Therefore the integrity of the material of the state of the art as a film is impaired and later on the film is not recognisable as such anymore.

In another preferred solution the engine bay part with the carrier layer and the multilayer surface material according to the invention and an additional absorbing layer placed either between the multilayer surface material and the carrier layer or underneath the carrier, further comprises a second film placed between the carrier and the additional absorbing layer to further enhance the acoustic properties of the multilayer trim part. Whereby all layers are laminated to the adjacent layers during forming of the final trim part.

In another preferred embodiment the second film is at least partially opened up such that the opened up area or areas have an air flow resistance (AFR). Preferably the AFR measured over the thickness of the final part after forming is in the range of between 500 and 4000 Nsm⁻³.

Although this opening of the film forming micro holes can be done by perforation comparable with the first film layer, it might also happen during the moulding treatment preferably with steam moulding. The film will become slightly porous, thereby obtaining an AFR over the part of between 1500 and 4000 N.s.m⁻³. This will further enhance the acoustic attenuation in particularly the insulating properties of the overall part.

Preferably the second film layer can be one of polyamide (PA), for instance PA 6 or PA66, polyester, PET or PBT or a copolymer of polyester, a polyolefin, like polyethylene (PE) or polypropylene (PP) or thermoplastic polyurethane (TPU), preferably the ester or ether based version. The second film layer may also be formed by a bilayer or multilayer film preferably a combination of the materials just mentioned, for instance PA6/PE or a copolymer of polyester (CoPES)/TPU.

TPU is preferred, as it is durable under a high thermal load. Preferably the TPU film has a melting range of at least above 140°C measured according to ISO 11357, preferably between 150 and 170°C.

Preferably the second film layer has a thickness of between approximately 25 and 120µm, preferably between 50 and 100µm.

In a further embodiment the production of the trim part according to the invention is given.

A mould comprising of 2 mould halves together forming a cavity with the desired 3 D shape of the trim part is used to produce the trim part according to the invention. The 3D shape might mean that the gap between both moulding surfaces is variable such that the product has a variable thickness, hence a variable density in the direction of the plain of the part.

In one mould half the desired materials is stacked in the correct layering is put in position, for instance the carrier material, the film and the outer fabric layer. The other optional layers might be included as deemed necessary.

The mould is closed and the materials are consolidated and/or the layers laminated to adjacent layers to form the final part. Preferably the moulding is done with pressure and direct steam preferably using saturated steam. Preferably also the compression of the carrier layer to obtain the desired stiffness is done in the same step.

The part formed can have a variable density and or thickness in the direction of the plane of the part. The site covered by the multilayer surface material according to the invention might have a surface structure in the form of for instance indents and/or rounded curves to emphasis or enhance the design optic of the surface cover, preferably including moulded logos. While the site facing the vehicle surface to be covered, can have a contour adapted to follow the surface to be covered.

Alternatively the material can be heated before the moulding step, followed by a hot or cold moulding step.

In the following the invention will be further explained as well as additional preferred embodiments disclosed. These further disclosed preferred solutions might also be used in combination with the embodiments already described.

### Brief description of drawings and further embodiments

Figure 1 shows schematically the set-up of the engine cover mounted on the engine.
Figure 2 shows preferred layouts for the material stacking according to the invention.

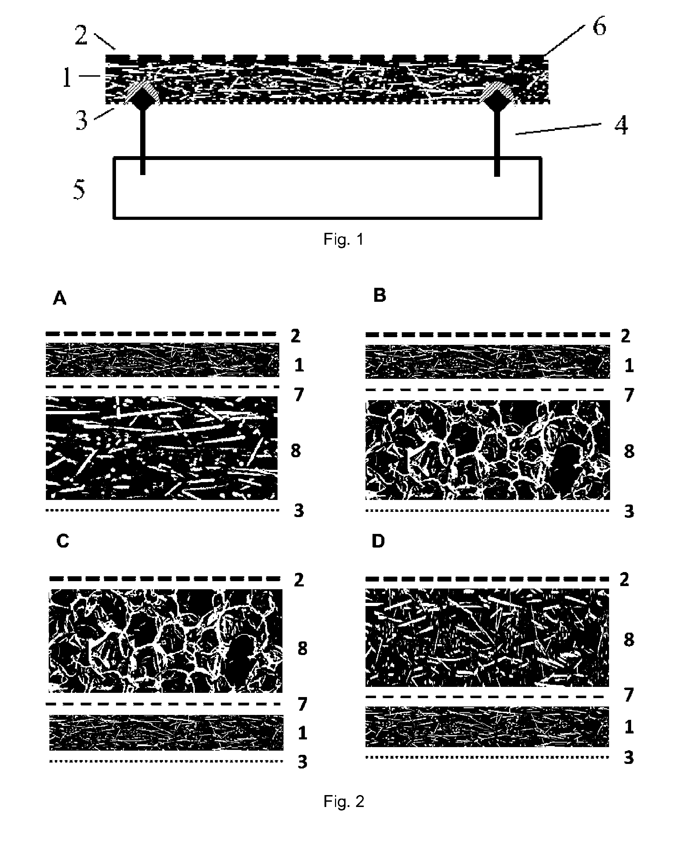

Figure 1 shows a Engine mounted trim part for a vehicle engine 5 comprising a fibrous carrier layer 1 and at least one mounting system 4 for mounting the trim part to a vehicle engine whereby the mounting system is built such that it can form a vibration-coupled connection. The fibrous carrier layer is at least self-damping.

Figure 1 further shows the connection area 6 of the base of mounting system 4 with the fibrous carrier layer 1. The connection area forming a material connection between the base material and the fibrous carrier layer.

Figure 2 A to D show preferred layouts for the material stacking according to the invention. The reference signs in these figures point to the same type of layer:
- 2 is a decorative surface layer;
- 1 is the carrier layer either in the form of a fibrous layer;
- 7 is an optional second film layer preferably also made of TPU;
- 8 is an optional absorbing layer. This layer can be either fibrous as shown in figure A or D, or a foam layer as shown in figure B or C.
- 3 is an optional scrim layer, for instance a nonwoven made of polyester material.

A layout in one preferred embodiment comprises of a surface material 2, for instance in the form of a textile fabric like a nonwoven, a knit or a woven fabric, a carrier layer 1 in the form of a fibrous layer made of 30 to 80% glass fibers and 20 to 50% of polyamide binder fibers are used. Eventually the glass fibers can be replaced by up to 100% of cotton fibers and or polyester fibers as filling material. Preferably the polyester fibers used are Polyethylene terephthalate (PET). They may be preferably self-crimped fibers.

All layers will be laminated to adjacent layers during the moulding process.

The polyamide binder fibers will melt and form small droplets locally binding the glass fibers together, without impairing the airflow resistance of the fibrous material. Preferably the airflow resistance of the carrier layer after forming the part will be between 450 and 4000 Nsm⁻³. The density of this layer can be between 100 and 800 kg/m³, preferably between 150 and 600 kg/m³.

Optionally an absorbing layer in the form of an open cell semi rigid polyurethane foam layer (8) (figure 6 or 9) or a second loftier fibrous layer (8) (figure 7 or 10) may be used. For the loftier fibrous layer the same fibrous material as for the carrier layer might be used; however with a lower density or a material comprising the same polyamide fibrous binder but having a polyester and or cotton as the main structural fibers. For the foam layer the area weight and or thickness of the slab stock material might be adapted.

## Claims

1. Engine mounted trim part for a vehicle engine comprising a fibrous carrier layer and at least one mounting system for mounting the trim part to a vehicle engine **characterised in that** the mounting system is built such that it can form a vibration-coupled connection upon mounting to the engine and the fibrous carrier layer is at least self-damping such that it can dampen the vibrational energy.

2. Engine mounted trim part according to claim 1, whereby the area of connection is materially connected to the fibrous layer, and at least partly penetrating the fibrous material.

3. Engine mounted trim part according to claim 1 or 2 whereby the connection is a welded connection.

4. Engine mounted trim part according to one of the preceding claims whereby the mounting system comprises at least a base area for materially connecting to the fibrous carrier layer and whereby the at least base area is made of a thermoplastic material.

5. Engine mounted trim part according to one of the preceding claims whereby the mounting system comprises a snap-in connection, preferably with a female part and a male part.

6. Engine mounted trim part according to one of the preceding claims whereby the mounting system is made of a rigid material, preferably a thermoplast or a metal or a combination of such materials.

7. Engine bay trim part according to one of the preceding claims further comprising at least a carrier layer consisting of a consolidated fibrous material consisting of fibres and a binder in the form of a thermoplastic binder or a thermoset binder whereby the binder forms small binding points between the fibers to consolidate the fibrous material.

8. Engine bay trim part according claim 7 whereby the fibres are at least one of thermoplastic fibers, preferably polyester fibers, preferably polyethylene-terephthalate (PET) or polybutylene terephthalate (PBT), natural fibers, preferably cotton or flax fibers, or mineral fibers, preferably glass fibers, carbon, ceramic or basalt fibers or a mixture of such fibers.

9. Engine bay trim part according to one of claim 5 whereby at least part of the thermoplastic fibers used are self-crimped fibers, preferably conjugate fibers, more preferably hollow conjugate fibers.

10. Engine bay trim part according to one of claim 7 or 9 whereby the thermoplastic binder is either a copolymer of polyester, or polyamide or whereby the thermoset binder is a resinous type preferably phenolic resin.

11. Engine bay trim part according to one of the preceding claims further comprising an acoustic absorbing layer, preferably a fibrous layer or an open cell foam layer.

12. Engine bay trim part according to one of the claims 11 further comprising a film layer between the carrier layer and the absorbing layer which is permeable or becomes permeable during the moulding of the part, preferably a thermoplastic polyurethane film layer.

13. Engine bay trim part according to claim 12, wherein the trim part has an overall air flow resistance of less than 4000 N.s.m⁻³.
